# EUROPEAN PATENT SPECIFICATION

(11) **EP 0 350 240 B1**
(45) Date of publication and mention of the grant of the patent: **09.11.1994**
(21) Application number: 89306737.1
(22) Date of filing: 03.07.1989
(51) Int. Cl.: C08J 3/03, C08F 283/12, C08F 230/08, D06M 15/643, C09D 151/08, C09J 151/08

(54) **Aqueous emulsion copolymers**
Copolymere in wässriger Emulsion
Copolymères en émulsion aqueuse

(30) Priority: 07.07.1988 US 215963
(43) Date of publication of application: 10.01.1990
(73) Proprietor: ROHM AND HAAS COMPANY, Philadelphia Pennsylvania 19105 (US)
(72) Inventor: Lavoie, Alvin Charles, Warminster Pennsylvania 18974 (US)
(74) Representative: Angell, David Whilton

(56) References cited:
- EP-A- 0 250 093
- EP-A- 0 267 494
- FR-A- 2 038 336
- US-A- 4 248 751

## Description

This invention concerns novel emulsions of silicon-containing copolymers having crosslinking functionality, and a free radical and cationic initiated aqueous emulsion polymerization process for preparing the copolymers.

The silicon-containing materials, referred to hereafter as "siloxanes", include, but are not limited to monomers capable of being formed into polymers having the structural formula
(Rₙ Si O_{((4-n)/2)})x where R may be at least one of hydrogen, alkyl, alkenyl, alkynyl, cycloalkyl, cycloalkenyl, aryl, alkaryl,or aralkyl hydrocarbons, halogen and cyano derivatives of such hydrocarbons, and hydrocarbons containing ether, thioether, ester or thioester linkages, such as for example, methyl, ethyl, propyl, butyl, amyl, dodecyl, octadecyl, myricyl, vinyl, allyl, hexenyl, ethynyl, propargyl, cyclobutyl, cyclohexyl, cyclohexenyl, phenyl, naphthyl, xenyl, tolyl, xylyl, mesityl, t-butylphenyl, benzyl, 2-phenylethyl, 2-phenylpropyl, 2-chloropropyl, 3,3,3-trifluoropropyl, chlorocyclohexyl, bromophenyl, dichlorophenyl, alphaalphaalpha-trifluorotolyl, mercaptoethyl, mercaptopropyl, mercaptodecyl, cyanoethyl, cyanopropyl and hydroxypropyl as set forth in US-A-3,575,910
and where n has an average value of from 0.5 to less than 3, and where x is at least 2 or greater and is typically several hundred or greater. The disclosure will also refer to the nomenclature in the silicone art commonly used to identify the four basic types of alkoxy silanes or siloxane structural units: M,D,T and Q. These designations refer to the number of Si-O bonds in the smallest repeating unit (from 1 to 4) with, for example, Q refering to (4) silicate.

The incorporation of siloxane functionality into polymers is desirable for improving a variety of physical or chemical properties such as for example: improved weatherability as by increasing resistance to ultraviolet radiation, oxygen, water or solvents; thermal stability; or to improve or facilitate adhesion or bonding to selected substrates.

Workers in the field of conventional free-radical initiated emulsion polymerization have attempted to prepare polymers incorporating siloxane functionality by utilizing alkoxy silanes or alkoxy silane derivatives. Attempts at preparing stable aqueous compositions containing siloxane functional emulsion polymers for use in curable formulations have not, however, been entirely successful. The primary problem has been caused by the reactivity of alkoxy silane or siloxane itself. This reactivity results in the formation of Si-O-Si crosslinks by the self-condensation of the siloxane functional groups.

US-A-3,294,725 describes the aqueous emulsion polymerization of organo siloxanes and silcarbanes without using strong bases or strong mineral acids as the polymerization agent and without using a separate emulsifying agent. Instead the '725 patent describes emulsion polymerization using a combined surface active sulfonic acid catalyst such as for example dodecylbenzene sulfonic acid (DBSA). While the '725 patent is limited to the homopolymerization of organo siloxanes and silcarbenes, and the copolymerization of various types of organo siloxanes with each other or with silcarbanes, the disclosure of the use of the surface active catalyst, and particularly the in situ formation of the catalyst, is relevant to the preparation of the novel copolymers of the present invention.

The use of sulfonic acid surfactant-catalyst in cationic polymerization in anionic emulsions of organo siloxanes, and particularly trimethoxysiloxanes (T siloxanes) was subsequently published by the '725 inventors in the Journal of Polymer Science No. 27, pp 27-34 (1969) Anionic Emulsion Polymerization of Siloxanes, D.R. Weyenberg, D.E. Findlay and J. Cekeda and reprinted in New Concepts in Emulsion Polymerization edited by J.C.H. Hwa and J.W. Vanderhoff (1969) Interscience publishers.

US-A-3,449,293 discloses the emulsion polymerization of organosilanes with unsaturated monomers, and more particularly of alkoxy silanes of the D,T or Q type with acrylic esters to produce solid polymers. These solid polymers are disclosed as being insoluble in common organic solvents. This insolubility indicates that the polymers are substantially crosslinked. The solid polymers are disclosed as possessing improved thermal stability as compared with non-crosslinked polymers formed from the polymerization of corresponding unsaturated monomers without siloxane incorporation. The emulsion copolymerization mechanism is described as being a simultaneous addition and condensation reaction initiated using conventional water soluble free radical initiator of the peroxide type, a redox initiator system and emulsifier.

US-A-3,575,910 is also directed to the preparation of siloxane-acrylate copolymers and aqueous emulsions containing these polymer particles. The copolymers contain 25 to 90 wt. percent acrylate and 10 to 75 wt. percent of a siloxane copolymer formed from 45 to 65 mole percent of D type (R₂ SiO) monomer and 35 to 55 mole percent of T type (RSiO₃/₂ monomer. Preferably the siloxane-acrylate copolymer is formed by a two stage emulsion polymerization typically involving first forming the siloxane copolymer and secondly polymerizing the acrylate monomers in the presence of, and onto, the siloxane copolymer. An alternate method (example 13) is disclosed by which the acrylate and siloxane monomers are simultaneously polymerizing using the step-wise addition of a free radical initiator and a buffer, but without the addition of a strong acid catalyst. This patent does not disclose or suggest the need for the cationic initiation of the siloxane monomers to form a siloxane-acrylate copolymer which does not prematurely crosslink.

US-A-3,706,697 discloses a free radical initiated aqueous emulsion polymerization of 55 to 90 percent by weight of an acrylic ester, from about 0.5 to 6 percent by weight of gamma-methacryloxypropyltrimethoxy silane (MATS) or gamma-acryloxypropyltrimethoxy silane and from about 9.5 to 44.5 weight percent of another copolymerizable free radical initiated monomer which does not have siloxane functionality.

US-A-3,729,438 discloses emulsion polymers containing siloxane functionality formed from copolymers of vinylacetate and a vinyl hydrolyzable silane, such as for example, MATS or vinyl trimethoxy silane (VTMS) or from vinylacetate, a free radical polymerizable ester (without siloxane functionality) and a vinyl hydrolyzable silane. As in the '697 patent, while the copolymers are disclosed as being capable of post-crosslinking by means of the hydrolyzable siloxane functionality, the only means disclosed to attempt to retard premature condensation crosslinking is through pH control of the aqueous emulsion within the range of pH 3.5 to 6. The siloxane functionality, imparted to such copolymers by such vinyl hydrolyzable silanes as disclosed in the '697 patent and as prepared by the method disclosed in the '438 patent is, however, too reactive and substantial premature crosslinking of such siloxanes is unavoidable even by pH adjustment. Applicant believes this to be the case even when the less reactive VTMS is employed because the method of preparation disclosed in the '438 patent produces larger particles than those which are necessarily prepared according to the present invention. As discussed hereinafter, increasing the particle size has an adverse affect on (ie it increases) pre-crosslinking.

The problem of excessive premature crosslinking of siloxane-containing emulsion polymers was addressed in Feasibility of Using Alkoxy Silane - Functional Monomers for the Development of Crosslinking Emulsions, T.R. Bourne, B.G. Bufkin, G.C. Wildman and J.R. Grave, Journal of Coatings Technology Vol. 54, No. 684 January 1982. The authors acknowledge the inability to suppress the hydrolysis-condensation reaction of alkoxy silanes to acceptable levels despite optimizing reaction conditions to provide stable colloidal systems. In order to provide crosslinkable functionality with greater resistance to hydrolysis the authors proposed using vinyl-type monomers with more sterically hindered alkoxy silane groups such as for example gamma-methacryloxypropylmethyldiethoxy silane γ-MAPMDES). However, because of the inability to prevent time dependent and implacable hydrolysis of the (alkyl-O-Si) bond in an aqueous environment, the authors concluded that the use of such sterically hindered alkoxy silane monomers, including γ-MAPMDES, is limited mainly to applications requiring pre-crosslinked emulsion systems. The final conclusion of the paper was that if alkoxy-silane functional emulsions are to achieve the more ubiquitous status sought by industry for an advanced-generation system, then hydrolysis-resistant monomers or aqueous barrier techniques must be developed to prevent premature crosslinking of the alkoxy silane moiety.

Two references which rely on the crosslinking of siloxane moieties in emulsion copolymers are US-A-3,898,300 and EP-A-0153600. US-A-3,898,300 discloses that the incorporation of crosslinked polyorganosiloxane particles into a styrenic copolymer matrix can improve impact strength to the polymer. EP-A-0153600 discloses that emulsion polymerizing T siloxanes with film forming monomers can provide coatings with crosslinked poly-organosiloxane microparticles which can act as rheology modifiers for solvent based formulations.

U.S.-A-3 624 015 (FR-A-2038 336) discloses the preparation of a silicone-acrylate copolymer. The preparation involves sequential polymerization of methylvinylsiloxane and dimethylsiloxane in a first stage, followed by polymerization of the product of the first stage with an acrylate. The finishing product, as a result of the sequential polymerization process, does not have crosslinkable silicon functionality.

Accordingly, despite a number of attempts to emulsion copolymerize siloxanes with conventional free radical polymerizable monomers, none of the prior attempts have succeeding in preparing stable, substantially non-crosslinked, siloxane-functional emulsion copolymers which can be made to crosslink when desired in a controllable manner.

It is, therefore, an object of the present invention to provide aqueous emulsion copolymers with siloxane functionality which are stable at ambient conditions and curable as desired.

It is an additional object of the invention to protect a sufficient percentage of the crosslinkable siloxane functional groups in an emulsion copolymer to make the copolymer more resistant to premature condensation crosslinking at ambient temperature without interfering with the ability of the polymer to be substantially crosslinked when needed.

Accordingly in one aspect the invention provides an aqueous emulsion of a copolymer, having crosslinkable silicon functionality, of a monomer system comprising from 70 - 99.5 weight percent of at least one silicon-free free radical initiable monomer, and no more than 30 weight percent of at least two silicon-containing monomers, at least one of said which is a free radical initiable precursor of a polysilane or polysiloxane capable of self-condensation crosslinking, and at least one other of which is a cationically initiatable precursor of a linear polysiloxane, and wherein there is a molar excess of the linear polysiloxane to the free radical initiable precursor and is at least 3:1.; the free radical initiable precursor being present in amounts of 0.1 weight percent and greater.

The silicon-free, free radical polymerizable monomer may be any of the various types of monomers conventionally used in emulsion polymerization provided that it is stable to strong acid polymerization conditions. This means that the monomer should desirably be resistant to hydrolysis under the low pH conditions employed in the cationic copolymerization reaction. Suitable monomers of this type include ethylenically unsaturated monomers having one or more groups of the formula - H₂ C = C < such as, for example: styrene, alpha-methylstyrene, vinyltoluene; olefins and diolefins such as, for example, ethylene, propylene, isoprene, butadiene; vinylchloride, vinylidene chloride, acrylonitrile, acrylamide, methacrylamide, n-hydroxy methacrylamide, acrylic acid, methacrylic acid, (meth)acryloxy propionic acid, itaconic acid, maleic acid, monomethyl maleate, monomethyl fumarate, monomethyl itaconate and various (C₁-C₂₀) alkyl or (C₃-C₂₀) alkenyl esters. Monomers, such as for example, vinylacetate, which hydrolyze readily at low pH conditions are not suitable for use in the invention. One or more of these hydrolytically stable, silicon-free, free radical polymerizable monomers may be used as the predominant monomer or monomers for preparing the copolymer. As used herein "predominant amount" refers to the combined concentration of all silicon-free, free radical polymerizable monomers used to prepare the copolymer, the concentration of said monomers being at least about 70 weight percent of all the monomers used in the copolymerization and up to as much as 99.5%, although a maximum proportion of 97% or as low as 90% is possible. The corresponding term "minor amount" shall refer to the balance of the concentration of all other monomers being at a concentration of about 30 weight percent or less of all monomers, although in correspondence with the above values for the silicon-free monomers, amounts as low as 10%, 3%, 1.5% or even 0.5% are possible.

The free radical polymerizable polysilane or polysiloxane precursor, also referred to as a "reactive silane", generally has the formula R SiX₃,RR′ SiX₂, or R R′₂ SiX where R is a radical which contains a functional group capable of undergoing free radical polymerization, where R′ may be the same as R or a hydrocarbon radical which may, but is not necessarily, capable of undergoing free radical polymerization such as, for example hydrogen, methyl and phenyl, and where X is a hydrolyzable radical. Representative R substituents may include gamma methacryloxypropyl, gammaacryloxypropyl, vinyl or allyl. R may also include a functional group capable of reacting with free radicals and incorporating the functionality into a polymer such as for example a chain transfer agent such as for example, mercaptopropyl. Representative X substituents may include acetoxy and alkoxy having 1 to 8 carbons such as for example, methoxy, ethoxy, isobutoxy, methoxymethoxy, ethoxymethoxy, and ethoxyphenoxy. Examples of representative reactive siloxanes include; methacryloxypropyl trimethoxy silane (MATS), acryloxypropyltrimethoxysilane; vinyltriethoxysilane (VTES), vinyltrimethoxysilane (VTMS) and allyltrimethoxysilane.

The second silicon containing monomer, referred to herein as the "linear polysiloxane precursor", is any material which can be polymerized to form a linear polysiloxane under aqueous cationic polymerization conditions. Suitable examples of such linear polysiloxane precursor monomers are cyclic dialkylsiloxanes such as, for example octamethylcyclotetrasiloxane (D₄), octaphenylcyclotetra siloxane, hexamethylcyclo-trisiloxane (D₃), decamethylcyclopentasiloxane (D₅) and derivatives thereof such as, for example;
tetramethyltetraphenylcyclotetrasiloxane, and monomeric dialkyldialkoxysilanes such as, for example; dimethyldimethoxysilane, dimethyldiethoxysilane, diphenyldimethoxysilane, and methylphenyldimethoxysilane. M type siloxane monomers such as for example, trimethylethoxysilane, trimethylacetoxysilane, or trimethylmethoxysilane may also be used as all of or a portion of the linear polysiloxane precursor component.

While the combined concentration of the reactive silane and linear polysiloxane precursor should be less than 30 weight percent of all monomers, the linear polysiloxane precursor is typically present at a higher concentration by weight than the reactive silane in order to achieve the resistance to premature self-crosslinking at ambient temperature which is as desired feature of the product of the invention. Although it should be noted that this invention is not intended to be limited by any theoretical chemical mechanism, the linear polysiloxane precursor is believed to protect or act as a cap on the reactive silane functional groups. According to this theory in order to achieve complete capping of the reactive silane functional groups at equilibrium there should be a molar excess of the linear polysiloxane precursor to the reactive silane of at least 3 to 1.

It is desirable from both an economical and, in most cases, a practical view to utilize as little of the reactive silane monomer as possible to prepare emulsion copolymers which are stable at ambient temperatures, curable when desired and which possess the improved properties associated with silane functionality. The lower concentration limit of the reactive silane monomer used is a function of the desired properties of the final product. The use of as low as 0.1 wt percent reactive siloxane may result, in certain cases, in a useful product and accordingly, is the lowest practical level useful for such copolymers. Accordingly, in such a system the lower limit on total concentration of the silicon-containing monomers is 0.4 percent. The ability of the emulsion polymer to remain substantially non-crosslinked at ambient temperatures decreases rapidly, however, as the concentration of the reactive silane increases even when the linear polysiloxane precursor protective monomer is employed. Increasing the concentration of the reactive silane monomer requires a corresponding increase in the concentration of the linear polysiloxane precursor monomer at the expense of the concentration of the predominant free radical silicon-free monomer. I have found it to be possible to prepare curable emulsion copolymers having siloxane functionality which are substantially non-crosslinked at ambient temperature when the reactive silane is employed at a concentration of about 1 weight percent on total monomers. As used herein "substantially non-crosslinked" refers to an emulsion polymer which has a soluble fraction as measured using a conventional organic solvent, such as for example tetrahydrofuran, of at least about 90 percent, or correspondingly that less than about 10 wt percent of the copolymer so formed has gelled or crosslinked during preparation. In some applications it may be more important, however, for the polymer to possess a certain level of siloxane functionality than for the copolymer to be substantially non-crosslinked. Nevertheless, I have found, however, that the use of the linear polysiloxane precursor comonomer can provide an emulsion copolymer with about three times greater soluble fraction than a corresponding copolymer formed from the same concentration (6 wt%) of the reactive silane but without the protective linear polysiloxane precursor comonomer.

The stability of the copolymer or its resistance to substantial premature crosslinking at ambient temperature, is a function of the particle size diameter of the emulsion copolymer. I have found that the stability of the copolymer increases as the particle size of the emulsion copolymer is decreased. This is demonstrated in illustrative example 1 which follows.

The emulsion copolymer preferably has an average particle size of less than 100 nanometers.
In another aspect the invention provides a process for preparing the aqueous emulsion of the invention, which process comprises performing a free radical and cationic initiated aqueous emulsion polymerization of a monomer system comprising at least one free radical polymerizable, silicon free monomer, a cationically initiable linear polysiloxane precursor and a free radical initiable precursor of a polysilane or polysiloxane capable of self-condensation cross-linking, at low pH conditions, preferably as low as pH2, followed by neutralization of said emulsion copolymer by the addition thereto of a base to bring the pH of the emulsion within the range of pH6 to pH8.

The aqueous emulsion according to the invention is obtainable by a free radical and cationic initiated polymerization process, and is preferably prepared by an emulsion polymerization reaction employing a conventional water soluble radical initiator and a cationic polymerization initiator. It is preferable to conduct the polymerization of all the monomers utilizing both types of initiators simultaneously, referred to herein as "concurrent polymerization", rather than by polymerizing the three types of monomers in sequential or alternating polymerizations. Furthermore, I have found it preferable to utilize a strong acid surfactant-catalyst, such as, for example, dodecylbenzene sulfonic acid as the cationic initiator and emulsifier instead of using a strong acid catalyst and separate emulsifer. These strong acid surfactant-catalysts and a method for their in situ formation, as preferably used herein, is disclosed in US-A-3,294,725. It is very desirable to conduct the polymerization at very low pH conditions, preferably at a pH as low as pH2, and to neutralize the copolymer emulsion at the end of the polymerization to a pH in the range of from pH6 to pH8, with pH7 being preferred (See Example 3). This final neutralization has been found to be critical to prevent undesirable crosslinking of the emulsion copolymer during subsequent ageing.

In addition, to the three basic types of monomers described previously, it is also possible to utilize polymerization chain transfer agents in a conventional manner to regulate the molecular weight of the copolymer. In this regard, it is also possible to utilize silicon containing monomers which are capable of acting as free radical chain transfer agents such as, for example; mercaptopropyltrimethoxysilane (MPTMS) or mercaptopropylmethyldimethoxysilane (MPMDMS).

The emulsion copolymers of the present invention may be used in a wide number of end use applications. These applications include curable coatings such as, for example; roof mastics, vertical mastics, paints, textile coatings, foam, froth or crushed backcoatings, and ink vehicles; caulks and joint or gap filling compounds, adhesives such as, for example, pressure sensitive, contact, hot melt, heat sealable, laminating and electronics; binders such as, for example; non-woven binders for cellulosics, synthetics, or ceramics including glass, carbon, silicone carbide, silicone nitride, flocking binders, paper binders, saturants for paper, pigment printing binders, pad drying binders, textile finishes and sizing agents; as modifiers for cements in aqueous and dried powder form, coatings and penetrants for leather; as modifiers for thermoplastics and thermosets included extruded plastics, as modifiers for emulsified asphalts containing surfactants or clay stabilized asphalt systems; and as additives to various materials to improve adhesion or other surface properties including friction reduction and processability.

The following examples are provided to illustrate the preparation and use of the emulsion copolymers of this invention.

### Example 1- Preparation of Emulsion Copolymer

An aqueous surfactant solution was prepared by dissolving 2.3 grams of a conventional alkyphenyl sulfonate surfactant (Sipon DS-4) (23%) in 350 grams of water. To the aqueous surfactant solution was added 246 grams butylacrylate (BA), 221 grams methylmethacrylate (MMA), 6 grams methacrylic acid (MAA), 47.7 grams octamethylcyclotetrasiloxane (D₄), and 5.3 grams methacryloxypropyltrimethoxy silane (MATS) followed by rapid stirring to form an emulsion. This monomer emulsion was gradually added over a 2.5 hour period to a four neck reaction flask at 85°C under nitrogen atmosphere; containing 690 grams water, and the following polymerization initiators: 7.9 grams dodecyl benzene sulfonic acid (DBSA) and 1.3 grams ammonium persulfate (APS). The reaction was continued and held at 85°C for 30 minutes after the monomer emulsion addition was complete. The contents of the reaction vessel were then cooled to room temperature. The resulting copolymer (46.8 BA, 42 MMA, 1.1 MAA, 9.1 D4 and 1 MATS (wt%)) had a solids content of 30.5%, pH of 2.0 and avg. particle size diameter of 44 nanometers (nm)

### Example 2 - Particle Size Effect on Soluble Fraction and Aging Stability

Copolymers were prepared following the procedure set forth in Example 1 such that the free radical silicon-free monomer composition for the copolymer was 52 wt% BA, 46.7 wt% MMA and 1.3 wt% MAA. Comparative samples, formed with 1% MATS or 1% VTES without using the linear polysiloxane precursor monomer, were prepared for the purpose of comparison. In addition, copolymers formed using both reactive silane and linear polysiloxane precursor monomers were formed using 1 wt% MATS or VTES and 9 wt% D4 as indicated. The DBSA surfactant catalyst used in the reaction vessel in Example 1, as the cationic initiator, was replaced, as indicated, in certain comparative examples with DS-4 emulsifier which had previously been used in Example 1 only to emulsify the monomers. The particle size of the polymers were measured using a Quasielastic Light Scattering Technique (or a Coulter Nano-Sizer). The soluble fraction of the emulsion was determined by using tetrahydrofuran (THF) solvent and separating and weighing the gelled and non-gelled portions. The aging test was performed by first adjusting the pH of the emulsion to pH 7 followed by remeasuring the soluble fraction (SF) in THF using the same technique after storing the emulsion for at least 10 days at 60° C. The results are shown in Table 1.

**TABLE 1**

| **SAMPLE** | **REACTIVE SILANE** | **LINGAR POLYSILOXANE PRECURSOR** | **REACTOR SURFACTANT(S) OR CATIONIC(S), CATALYST (WT% ON MONOMERS)** | **PARTICLE SIZE (NM)** | **EMULSION SF (%)** | **AGED (S) (PH7) (%)** |
|---|---|---|---|---|---|---|
| Comparative 1 | MATS | --- | (C) 1.5 DBSA | 60 | 11 | 10 |
| 2 | MATS | D4 | (C) 1.5 DBSA | 60 | 97 | 92 |
| Comparative 3 | MATS | --- | (S) 1.5 DS-4 | 56 | 63 | 24 |
| Comparative 4 | MATS | D4 | (S) 1.5 DS-4 | 51 | 46 | 24 |
| Comparative 5 | VTES | --- | (C) 1.5 DBSA | 55 | 100 | 93 |
| 6 | VTES | D4 | (C) 1.5 DBSA | 55 | 100 | 96 |
| Comparative 7 | VTES | --- | (C) 0.2 DBSA | 92 | 39 | 43 |
| 8 | VTES | D4 | (C) 0.2 DBSA | 93 | 26 | 50 |
| Comparative 9 | VTES | --- | (S) 1.5 DS-4 | 60 | 94 | 91 |
| 10 | VTES | D4 | (S) 1.5 DS-4 | 60 | 91 | 96 |
| Comparative 11 | VTES | --- | (S) 0.1 DS-4 | 100 | 32 | |

The results indicate that the presence of linear polysiloxane precursor comonomer (D4) provides a significantly higher solubility fraction for emulsion copolymers containing MATS in the case where DBSA surfactant/catalyst is used, but not in the case of the DS-4 surfactant, where no cationic catalysis takes place. The presence of D4 also provides improved stability. However, in the case where a less reactive "reactive silane" VTES is used, the "protection" afforded by the linear polysiloxane precursor D4 is not needed, and thus D4 can be seen to have had no appreciable effect on the soluble fraction or aging stability of the emulsion. However whilst in the VTES containing systems the D4 is not needed to provide aging stability, it is needed to give full property development and is thus necessary for the purposes of the invention. This is demonstrated in Table 1a below. This experiment demonstrates that cured films formed from the sample with VTES/D4 (Sample 1) has much better solvent scrub resistance relative to the VTES only sample 2

**Table 1A**

| Sample | Initial Sol. Frac. | Aged Sol. Frac. | Cured Films (150°C/30 min.) | |
|---|---|---|---|---|
| | | | Sol. Frac. | MEK Solvent Scrub Resistance (1 to 5, 5 no film damage) |
| 1 | 98 | 96 | 8 | 4 |
| 2 | 97 | 93 | 5 | 1 |
| Sample 1 (46.8 BA/42 MMA/1.2 MAA/9 D4/1 VTES) Sample 2 (51.5 BA/46.2/1.3 MAA/1 VTES) | | | | |

### Example 3 - Heat Age Stability as Function of pH

Samples of emulsion copolymers with siloxane functionality were prepared according to example 1 to contain 46.8% BA/42% MMA/1.2% MAA/9% D4/1% MATS. The samples were pH adjusted to pH in the range of 2-9.5 with a base such as for example, ammonia, sodium hydroxide or alkylamine, and the soluble fraction of the emulsion was measured as in Example 1 after storage over a 30 day period. The results are shown in Table 2.

**TABLE 2**

| **SOLUBLE FRACTION ON STORAGE** | | | |
|---|---|---|---|
| **PH** | **INITIAL** | **10 DAYS** | **30 DAYS** |
| 2 | 97 | 9 | -- |
| 6 | 97 | 85 | 90 |
| 7 | 97 | 92 | 96 |
| 8 | 97 | 92 | 99 |
| 9.5 | 92 | 22 | 22 |

The results indicate that the emulsion copolymer remained substantially non-crosslinked for 30 days provided that pH of the emulsion was first adjusted to a pH of from about 6 to 8.

### Example 4 - Effect of Reactive Silane Concentration

The following copolymers were prepared, neutralized with ammonium hydroxide to pH7, and soluble fractions were measured following the procedure set forth in Example 1. The results are shown in Table 3.

**TABLE 3**

| SAMPLE | COMPOSITION | SF |
|---|---|---|
| Comparative 1 | 52 BA/46.7 MMA/1.3 MAA 100 | 100 |
| Comparative 2 | 51.5 BA/46.2 MMA/1.3 MAA/1 MATS | 11 |
| 3 | 46.8 BA/42 MMA/1.2 MAA/9D4/1 MATS | 89 |
| 4 | 50.3 BA/45.1 MMA/1.3 MAA/2.3 D4/1 MATS | 41 |
| 5 | 51 BA/45.9 MMA/1.3 MAA/0.7 D4/1.1 MATS | 16 |
| 6 | 41.6 BA/37.4 MMA/1 MAA/18 D4/2 MATS | not measured |
| 7 | 36.4 BA/32.7 MMA/0.9 MAA/27 D4/3 MATS | 25 |
| 8 | 46.8 BA/42 MMA/1.2 MAA/7 D4/3 MATS | 20 |
| 9 | 49.4 BA/44.4 MMA/1.2 MAA/2 D4/3 MATS | 20 |
| 10 | 46.8 BA/42 MMA/1.2 MAA/4 D4/6 MATS | 29 |
| 11 | 46.8 BA/43.2 MMA/9 D4/1 MATS | 68 |
| 12 | 36 BA/47.7 MMA/4.5 HEMA/1.8 MMA/9 D4/1 MATS | 71 |
| 13 | 36 BA/29.7 MMA/22.5 STY/1.8 MAA/9 D4/1 MATS | 87 |
| 14 | 90 STy/9 D4/1 MATS | 88 |
| 15 | 64.8 BA/19.8 AN/5.4 AOPA/9 D4/1 MATS | 84 |
| 16 | 88.2 BA/1.8 MAA/9 D4/1 MATS | not measured |
| 17 | 46.8 BA/42 MMA/1.2 MAA/9 D4/ 1 VTES | 98 |
| 18 | 79.8 EA/9 AN/1.2 MAA/9 D4/1 MATS | 90 |
| 19 | 46.8 BA/47.8 MMA/0.4 MAA/9 D4/1 MATS | 73 |
| 20 | 46.8 BA/40.5 MMA/2.7 IA/9 D4/1 MATS | 71 |
| 21 | 46.8 BA/39.6 MMA/3.6 MAA/9 D4/1 MATS | 77 |
| 22 | 51.7 BA/46.5 MMA/1.3 MMA/0.4 D4/0.1 MATS | 97 |
| 23 | 51.2 BA/46.0 MMA/1.3 MMA/1.3 D4/0.2 MATS | 98 |

### Example 5- Nonwoven Binders

Two emulsion polymers of compositions 35.1 BA/54 MMA/.9 MAA/9 D4/1 MATS and 39 BA/60 MMA/1 MMA were prepared as set forth in Example 1. The latexes were neutralized with ammonium hydroxide to pH=7. The latexes were then diluted to 12% solids with water. A polyester web was dipped into this solution and passed through a Birch Brothers Padder at 0.0195 Kgcm⁻² (40 PSI). This impregnated polyester mat was dried and cured for 5 min. at 194°C (350° F). The siliconized polymer sample 1 performed superior to the unsiliconized control (comparative 2) with respect to elongation of the sample under load at elevated temperatures. This is an important property of a nonwoven binder for use in the preparation of polyester mats for asphalt roofing applications.

| Sample | Composition | %Elongation @ 194°C (350 °F) | |
|---|---|---|---|
| | | Load = 5 dmKgs⁻² (5dN) | 8 dmKgs⁻² (8dN) |
| 1 | 35.BA/54MMA/.9MMA/9D4/1 MATS | 11.9 | 22.7 |
| Comparative 2 | 39 BA/60 MMA/1 MAA | 22.8 | 38.2 |

### Example 6 - Leather Topcoat

A siliconized emulsion polymer of composition 67.5 BA/21.6 AN/0.9 AA/9 D4/1 MATS was prepared as set forth in Example 1. This latex was subsequently second staged with 10 wt% of a composition 50 wt% (butyleneglycoldimethacrylate)/50 wt% MMA and neutralized with ammonium hydroxide to pH=7. This emulsion polymer was used to prepare a topcoat formulation as outlined below The topcoat was pressurized air sprayed at between 0.00053 gcm⁻² (0.5) and 0.0016 gcm⁻² (1.5 gm/sq. ft.) dry weight. The leather was dried at 77.8°C (140°F) for 15 to 30 min. then air dried for 48 hrs. before testing.

| Topcoat Formulation | |
|---|---|
| Material | Parts by weight |
| Siliconized Acrylic Emulsion Polymer | 50 |
| Dulling Agent | 10 |
| Ammonia (aqueous 28%) | 1 |
| Leveling Aid | 3 |
| Primal? XC Deep Black Pigment | 1 |
| Slip Aid | 3.5 |
| Water | 24 |

The above ingredients were mixed at room temperature and applied to a funiture upholstery leather which had been basecoated, with the formulation set forth below. The leather was basecoated at an add on of 0.001 gcm⁻² to 0.0032 gcm⁻² (1 to 3 gm/sq. ft.) via a pressurized spray system and dried at 77.8°C (140°F) for 15 to 30 min the air dried for 2 hours. The basecoated leather was then coated with the below listed intermediate coating. The intermediate coating was pressurized spray coated at 0.00053 gcm⁻² (0.5) to 0.0016 gcm⁻² (1.5 gm/sq. ft.) add on. The leather was then dried at 77.8°C (140°F) for 15 to 30 min. then air dried at room temperature for 2 hours.

| BASECOAT FORMULATION | |
|---|---|
| Material | Parts by weight |
| Water | 292 |
| Leveling Aid | 23 |
| Penetrator | 23 |
| Polymeric Binder Emulsion | 199 |
| Polymeric Binder Emulsion | 106 |
| Filler | 100 |
| Pigment | 257 |

| INTERMEDIATE COAT FORMULATION | |
|---|---|
| Material | Parts by weight |
| Water | 345 |
| Leveling Aid | 34 |
| Polymeric Emulsion | 345 |
| Pigment | 207 |
| Dull Finish | 69 |

The above top coated leather had a Veslic Wet Crock (1Kg @ 10% damage) of 600 cycles, SATRA adhesion of greater than 950 gm/cm with a mixed base/grain failure mode, Newark Flex (60,000 cycles) no cracks, cold crack failure at -17.8°C (0°F), and Taber Wear Test (#10 wheel, 1Kg, 1000 cycles) pass.

### Example 7 - Paint Formulation:

A siliconized latex polymer (46.8 BA/42MMA/1.2 MAA/9D4/1 MATS) was prepared as set forth in Example 1 and neutralized with ammonium hydroxide to pH7. This latex polymer was used as the binder for a latex paint. Unit amounts of materials are listed in the table below (batch size is based on a 227.3 litres (50 gal.) run). Ti-Pure® R-900, Tamol® 731, Foamaster® VL, and propylene glycol are charged to a Cowles blender and stirred to produce a pigment grind. Water, latex binder, Texanol® (coalesent), and Nuosept® 95 (bacteriocide) were added to the pigment grind. The paint was then adjusted to 30.8 volume solids and a viscosity of 80 Krebs with a mixture of water and a (rheology modifier). The above paint when brushed onto a substrate had good flow and leveling.

| PAINT FORMULATION: | | |
|---|---|---|
| Material | Kg (Pounds) | litres (Gallons) |
| Propylene Glycol | 16.32 (36.00) | 18.91 (4.16) |
| Tamol? 731 (25.0%) | 3.08 (6.81) | 3.36 (0.74) |
| Foamaster VL | 0.22 (0.5) | 0.31 (0.07) |
| Ti-Pure R-900 | 60.70 (133.82) | 18.22 (4.01) |
| Water | 6.80 (15.00) | 8.18 (1.80) |
| Siliconized Latex Binder | 136.75 (301.48) | 158 (34.76) |
| Texanol | 2.41 (5.32) | 3.04 (0.67) |
| Water | 2.26 (5.00) | 2.72 (0.60) |
| Nuosept 95 | 0.45 (1.00) | 0.50 (0.11) |
| Foamaster 95 | 0.22 (0.5) | 0.31 (0.07) |
| Water Pheology Modifier | 11.39 (25.13) | 13.72 (3.02) |
| TOTAL | 240.66 (530.56) | 227.3 (50.00) |

| | |
|---|---|
| PVC | = 26.066 |
| Volume Solids | = 30.803 |
| Lbs/Gal | = 10.611 |
| Weight Solids | = 45.218 |

### Example 8 - Adhesive:

Two emulsion polymers one of composition 90 BA/2MAA (Latex 1) and one of 88.2 BA/1.8MAA/9D4/1MATS (Latex 2) composition were prepared as set forth in Example 1 and neutralized with ammonium hydroxide to pH7 and used as adhesives as set forth below.

2.54cm (One inch) wide strips of 80² cotton cloth were immersed in each of the wet adhesives for 10 seconds. As the strips were removed, excess adhesive was doctored off with glass rods. The strips were wet-laminated to 5.08 cm x 15.24 cm x 0.3175 cm (2'x6'x1/8') glass plates, covered with untreated polyethylene film, and then rolled with a 0.90 Kg (2lb.) soft rubber roller (2 passes). The samples were divided into 4 series and dried. One series was dried at room temperature for 7 days. A second series was dried at room temperature for 7 days then baked @ 150°C for 30 min. A third series was air dried for 6 days at room temperature then water soaked for 24 hours. The fourth series was air dried for 6 days, baked @ 150°C for 30 min. then water soaked for 24 hours. All baked samples were cooled to room temperature before testing and before water soaking. Duplicates of all samples were prepared. The average values are listed in the table below. It is clear from this data that the siliconized adhesive (Latex 2) has superior adhesion to the glass substrate relative to the unsiliconized control (Latex 1), and this is especially evident in the water soaked samples.

| SILICONIZED ADHESIVES - ADHESION TO GLASS: | | | | |
|---|---|---|---|---|
| Sample/Condition | Air Dried 7 Days | | Air Dried 6 Days/24hr.H20 Soak | |
| | RT | 150°C/30 min. | RT | 150°C/30 min. |
| Latex 1 | 4.2 A | 3.7 A | DL | 1.3 A |
| Latex 2 | 4.5 A | 19.7 C | 6.2 A | 17.8 AFB |
| A = Adhesive failure from substrate C = Cohesive failure AFB = Adhesive failure from cloth backing DL = Delaminated from glass | | | | |

### Example 9 - Curable Coating:

A polymer was prepared as described in example 1 having a composition (46.8 BA/42MMA/1.2MAA/9 D4/1MATS). This latex was neutralized to pH=7.0 with aqueous ammonia. Three films were prepared on glass projector slides using a 0.254 mm (10 mil.) drawdown bar. One film was allowed to dry overnight at room temperature. The second film was allowed to dry at room temperature (RT) for 30 min. then was baked at 150° for 30 min. The third film was dried and aged at room temperature for 60 days. At the end of the drying/baking cycle the films were removed from the glass slides (scrapped off using a razor blade). The films were then shaken in acetone overnight, filtered, and the amount of soluble material determined by removing the acetone by evaporation. The results are summarized in the table below. These results clearly show that crosslinked films can be obtained by either baking or prolonged ambient curing conditions.

| Composition | SF T overnight | SF 30 min. RT 30 min. 150°C | SF 60 days |
|---|---|---|---|
| 46.8 BA/42 MMA/1.2 MAA/9 D4/1 MATS | 77.6 | 8.1 | 2.7 |

The ambient cure of the siliconized latex polymers can also be catalyzed using many of the standard silcone catalysts (typically oil soluble salts of tin, zinc, and ziconium). An emulsion polymer of (46.8 BA/42MMA/1.2MAA/9D4/1MATS) composition was prepared as described in example 1. The latex was neutralized to pH=7 with ammonium hydroxide. An emulsion of Tin(11)octoate was prepared by mixing 4 gm of surfactant (Abex 26-S) in 6 gm of water to this mixture was added 10 gm of tin(11)octoate and the mixture was then homogenized. A blend of the tin emulsion and the emulsion polymer was made (3% Tin solids/polymer solids). The blend was drawn (0.254mm (10 mil) drawdown opening) onto a glass projector slide. Also drawn down as a control was the neat latex. The two films were dried at room temperature overnight. The soluble fraction of the films were measured as in the above example. The control film had a soluble fraction of 76.5%. The Tin(11)octoate catalyzed film had a soluble fraction of 4.1%. This clearly demonstrates that the metal salt catalyzed the ambient temperature crosslinking of the siliconized polymer.

## Claims

1. An aqueous emulsion of a copolymer, having crosslinkable silicon functionality, of a monomer system comprising from 70 - 99.5 weight percent of at least one silicon-free free radical initiable monomer, and no more than 30 weight percent of at least two silicon-containing monomers, at least one of said which is a free radical initiable precursor of a polysilane or polysiloxane capable of self-condensation crosslinking, and at least one other of which is a cationically initiatable precursor of a linear polysiloxane, and wherein there is a molar excess of the linear polysiloxane to the free radical initiable precursor and is at least 3:1.; the free radical initiable precursor being present in amounts of 0.1 weight percent and greater.

2. An aqueous emulsion according to claim 1 wherein said copolymer is formed by a concurrent free radical and cationic initiated polymerisation process.

3. An aqueous emulsion according to claims 1 or 2 wherein the polysilane or polysiloxane precursor has the formular RSiX₃, RR'SiX₂, RR'₂SiX, where R is a radical containing a functional group capable of undergoing free radical polymerisation, R' is the same as R or a hydrocarbon radical, and X is a hydrolysable radical.

4. An aqueous emulsion according to any preceding claim wherein said polysilane or polysiloxane precursor is methacryloxy-propyltrimethoxysilane, acryloxypropyltrimethoxysilane, vinyltriethoxysilane, vinyltrimethoxysilane or allyltrimethoxy silane.

5. An aqueous emulsion according to any preceding claim wherein said linear polysiloxane precursor is a cyclic dialkyl siloxane or derivative thereof.

6. An aqueous emulsion according to any preceding claim comprising from 70 to 97.5, and preferably from 70 to 90 weight percent of said silicon free radical initiable monomer or monomers and from 30 to 0.5, preferably from 30 to 1.5 and more preferably from 30 to 10 weight percent of said silicon-containing monomers.

7. An aqueous emulsion according to any preceding claim comprising from 1 to 6 weight percent of at least one polysilane or polysiloxane precursor.

8. An aqueous emulsion according to any preceding claim having a pH in the range from pH6 to pH8.

9. An aqueous emulsion according to any preceding claim wherein the copolymer has an average particle size of less than 100 nanometers.

10. A process from preparing the aqueous emulsion of any of the preceding claims, which process comprises performing a free radical and cationic initiated aqueous emulsion polymerization of a monomer system comprising at least one free radical polymerizable, silicon free monomer, a cationically initiable linear polysiloxane precursor and a free radical initiable precursor of a polysilane or polysiloxane capable of self-condensation cross-linking, at low pH conditions, preferably as low as pH2, followed by neutralisation of said emulsion copolymer by the addition thereto of a base to bring the pH of the emulsion within the range of pH6 to pH8.

11. A non-woven binder, leather coating, paint formulation or adhesive comprising a copolymer from the aqueous emulsion of any of claims 1 to 9.

## Patentansprüche

1. Wäßrige Emulsion eines Copolymers, das eine vernetzbare Silicium-Funktionalität aufweist, eines Monomersystems, welches von 70-99,5 Gewichtsprozent mindestens ein Silicium-freies, radikalisch initiierbares Monomer und nicht mehr als 30 Gewichtsprozent mindestens zwei Siliciumenthaltende Monomeren umfaßt, von welchen mindestens eines eine radikalisch initiierbare Vorstufe eines Polysilans oder Polysiloxans, welches durch Vernetzen selbst kondensieren kann, ist, und von welchen mindestens ein anderes eine kationisch initiierbare Vorstufe eines linearen Polysiloxans ist, und worin ein molarer Überschuß des linearen Polysiloxans zur radikalisch initiierbaren Vorstufe vorhanden und mindestens 3:1 ist, wobei die radikalisch initiierbare Vorstufe in Mengen von 0,1 Gewichtsprozent und mehr vorhanden ist.

2. Wäßrige Emulsion nach Anspruch 1, in welcher das Copolymer durch gleichzeitig ablaufende, radikalisch und kationisch initiierte Polymerisationsverfahren gebildet ist.

3. Wäßrige Emulsion nach Anspruch 1 oder 2, in welcher die Polysilan- oder Polysiloxan-Vorstufe die Formel RSiX₃, RR'SiX₂, RR'₂SiX ist, in welcher R ein Rest ist, der eine funktionelle Gruppe enthält, die eine radikalische Polymerisation durchmachen kann, R' gleich R oder ein Kohlenwasserstoffrest ist und X ein hydrolysierbarer Rest ist.

4. Wäßrige Emulsion nach einem vorhergehenden Anspruch, in welcher die Polysilan- oder Polysiloxan-Vorstufe Methacryloxypropyltrimethoxysilan, Acryloxypropyltrimethoxysilan, Vinyltriethoxysilan, Vinyltrimethoxysilan oder Allyltrimethoxysilan ist.

5. Wäßrige Emulsion nach einem vorhergehenden Anspruch, in welcher die lineare Polysiloxan-Vorstufe ein cyclisches Dialkylsiloxan oder ein Derivat davon ist.

6. Wäßrige Emulsion nach einem vorhergehenden Anspruch, welche von 70 bis 97,5 Gewichtsprozent und vorzugsweise von 70 bis 90 Gewichtsprozent das Silizium-freie, radikalisch initiierbare Monomer oder Monomere und von 30 bis 0,5 Gewichtsprozent, vorzugsweise von 30 bis 1,5 Gewichtsprozent und mehr bevorzugt von 30 bis 10 Gewichtsprozent, die Silicium-enthaltenden Monomere umfaßt.

7. Wäßrige Emulsion nach einem vorhergehenden Anspruch, welche von 1 bis 6 Gewichtsprozent mindestens eine Polysilan- oder Polysiloxan-Vorstufe umfaßt.

8. Wäßrige Emulsion nach einem vorhergehenden Anspruch mit einem pH im Bereich von pH 6 bis pH 8.

9. Wäßrige Emulsion nach irgendeinem vorhergehenden Anspruch, in welcher das Copolymer eine durchschnittliche Partikelgröße von weniger als 100 Nanometer besitzt.

10. Verfahren zum Herstellen einer wäßrigen Emulsion gemäß einem der vorhergehenden Ansprüche, welches Verfahren umfaßt: ein Durchführen einer radikalisch und kationisch initiierten wäßrigen Emulsionspolymerisation eines Monomersystems, welches mindestens ein radikalisch polymerisierbares, Silicium-freies Monomer, eine kationisch initiierbare, lineare Polysiloxan-Vorstufe und eine radikalisch initiierbare Vorstufe eines Polysilans oder Polysiloxans, die unter Selbstkondensation vernetzen können, umfaßt, bei niedrigen pH-Bedingungen, vorzugsweise nicht höher als pH 2, gefolgt von einer Neutralisation des Emulsionscopolymers durch Zugeben einer Base, um den pH der Emulsion innerhalb des Bereiches von pH 6 bis pH 8 zu bringen.

11. Vlies-Bindemittel, Lederbeschichtung, Anstrichformulierung oder Klebstoff, welche ein Copolymer von der wäßrigen Emulsion gemäß einem der Ansprüche 1 bis 9 umfaßt.

## Revendications

1. Emulsion aqueuse d'un copolymère, comportant de la fonctionnalité réticulable contenant du silicium, d'un système de monomères comprenant de 70 à 99,5 % en poids d'au moins un monomère dépourvu de silicium et amorçable par des radicaux libres et pas plus de 30 % en poids d'au moins deux monomères contenant du silicium, dont l'un au moins est un précurseur, amorçable par des radicaux libres, d'un polysilane ou d'un polysiloxane capable d'une réticulation d'autocondensation, et dont au moins un autre est un précurseur, amorçable par voie cationique, d'un polysiloxane linéaire, l'émulsion comportant un excès molaire, valant au moins 3:1, du polysiloxane linéaire par rapport au précurseur amorçable par des radicaux libres, le précurseur amorçable par des radicaux libres étant présent en des quantités égales ou supérieures à 0,1 % en poids.

2. Emulsion aqueuse selon la revendication 1, dans laquelle ledit copolymère est formé par un procédé de copolymérisations simultanées, avec amorçage par des radicaux libres (polymérisation radicalaire) et avec amorçage cationique.

3. Emulsion aqueuse selon la revendication 1 ou 2, dans laquelle le précurseur de polysilane ou de polysiloxane a pour formulé RSiX₃, RR'SiX₂, RR'₂SiX, où R représente un radical contenant un groupe fonctionnel capable de subir une polymérisation radicalaire, R' est le même que R ou représente un radical hydrocarboné, et X représente un radical hydrolysable.

4. Emulsion selon l'une quelconque des revendications précédentes, dans laquelle le précurseur de polysilane ou de polysiloxane est le méthacryloxypropyltriméthoxysilane, l'acryloxypropyltriméthoxysilane, le vinyltriéthoxysilane, le vinyltriméthoxysilane ou l'allyltriméthoxysilane.

5. Emulsion aqueuse selon l'une quelconque des revendications précédentes, dans laquelle ledit précurseur de polysiloxane linéaire est un dialkylsiloxane cyclique ou un dérivé de ce siloxane.

6. Emulsion aqueuse selon l'une quelconque des revendications précédentes, comprenant de 70 à 97,5, et de préférence de 70 à 90 % en poids dudit monomère ou desdits monomères ne contenant pas du silicium et amorçable par un mécanisme de radicaux libres et de 30 à 0,5, de préférence de 30 à 1,5 et encore mieux de 30 à 10 % en poids desdits monomères contenant du silicium.

7. Emulsion aqueuse selon l'une quelconque des revendications précédentes, comprenant 1 à 6 % en poids d'au moins un précurseur de polysilane ou de polysiloxane.

8. Emulsion aqueuse selon l'une quelconque des modifications précédentes, ayant un pH compris entre pH 6 et pH 8.

9. Emulsion aqueuse selon l'une quelconque des revendications précédentes, dans laquelle le copolymère a une taille particulaire moyenne inférieure à 100 nanomètres.

10. Procédé de préparation d'une émulsion aqueuse selon l'une quelconque des revendications précédentes, ce procédé comprenant la réalisation de la polymérisation en émulsion aqueuse, par amorçage radicalaire et par amorçage cationique, d'un système monomère comprenant au moins un monomère dépourvu de silicium, polymérisable par un mécanisme de radicaux libres, un précurseur de polysiloxane linéaire amorçable par voie cationique et un précurseur, amorçable par un mécanisme de radicaux libres, d'un polysilane ou d'un polysiloxane capable d'une réticulation par autocondensation, à de basses conditions du pH, de préférence un pH aussi faible que 2, opération suivie d'une neutralisaiton dudit copolymère, obtenu en émulsion, par l'addition à cette émulsion d'une base pour porter le pH de l'émulsion à une valeur comprise entre pH 6 et pH 8.

11. Liant non tissé, revêtement pour du cuir, formulation de peinture ou adhésif, comprenant un copolymère provenant de l'émulsion aqueuse selon l'une quelconque des revendications 1 à 9.
